# EUROPÄISCHE PATENTSCHRIFT

(11) **EP 1 043 152 B1**
(45) Veröffentlichungstag und Bekanntmachung des Hinweises auf die Patenterteilung: **29.10.2003**
(21) Anmeldenummer: 00104906.3
(22) Anmeldetag: 08.03.2000
(51) Int. Cl.: B32B 31/26, C09J 7/02, G09F 3/10

(54) **Verfahren und Vorrichtung zur Herstellung einer Folienbahn**
Method and apparatus for the fabrication of a film web
Procédé et appareil pour la fabrication d'une bande de film

(30) Priorität: 08.03.1999 DE 19909864
(43) Veröffentlichungstag der Anmeldung: 11.10.2000
(73) Patentinhaber: Jackstädt GmbH, D-42103 Wuppertal (DE)
(72) Erfinder: Frenkler, Dieter, Dipl.-Ing., 58332 Schwelm (DE)
(74) Vertreter: Gesthuysen, von Rohr & Eggert

(56) Entgegenhaltungen:
- US-A- 4 948 450

## Beschreibung

Die Erfindung betrifft ein Verfahren zur Herstellung einer Folienbahn, wobei die Folienbahn wenigstens eine Druckträgerschicht aus Kunststoff, eine Haftklebstoffschicht und eine Abdeckschicht aufweist, wobei die Haftklebstoffschicht auf die Druckträgerschicht aufgebracht wird, wobei die mit der Haftklebstoffschicht versehene Druckträgerschicht einer Trocknung zugeführt wird und wobei die mit der Haftklebstoffschicht versehene Druckträgerschicht nach der Trocknung mit der Abdeckschicht zur Herstellung der Folienbahn zusammengeführt wird. Des weiteren betrifft die vorliegende Erfindung eine Vorrichtung zur Durchführung des vorgenannten Verfahrens.

Bei einem bekannten Verfahren zur Herstellung einer Folienbahn, das üblicherweise als Transferverfahren bezeichnet wird, wird der Haftklebstoff auf die Abdeckschicht aufgebracht, die mit einer klebstoffabweisenden Silikonschicht beschichtet ist. Anschließend wird die silikonisierte Abdeckschicht mit dem aufgebrachten Haftklebstoff einer Trocknungsstation zugeführt, damit der Haftklebstoff auf der Abdeckschicht trocknet. Parallel dazu wird auf die aus Kunststoff bestehende Druckträgerschicht ein sogenannter Primer aufgebracht und anschließend werden die mit dem Primer versehene Druckträgerschicht und die Abdeckschicht mit dem aufgebrachten Haftklebstoff zu der Folienbahn zusammengeführt.

Das zuvor beschriebene Transferverfahren hat allerdings verschiedene Nachteile. Im Hinblick auf die Oberflächenspannung des Haftklebstoffes kann es beim Aufbringen auf die klebstoffabweisende Silikonschicht zu Benetzungsfehlern kommen. Um diese Benetzungsfehler beim Aufbringen des Haftklebstoffs auszuschließen, sind entsprechende Zusatzstoffe erforderlich, die dem Haftklebstoff beizugeben sind. Hierdurch ist eine entsprechende Mischanlage erforderlich. Weiterhin wird die silikonisierte Abdeckschicht beim Aufbringen des Haftklebstoffes und während der nachfolgenden Trocknung relativ stark beansprucht. Diese Beanspruchung ist deshalb nachteilig, da die auf die Abdeckschicht aufgebrachte Silikonschicht in der Regel sehr dünn ist (bis etwa 1 µm) und es schon bei geringen Beanspruchungen leicht zu einer Beschädigung der Silikonschicht kommen kann. Hierdurch können sich erhebliche Probleme beim späteren Ablösen der Druckträgerschicht von der silikonisierten Abdeckschicht ergeben.

Des weiteren ist aus der Praxis ein Verfahren der eingangs beschriebenen Art bekannt, das üblicherweise als Direktverfahren bezeichnet wird. Das Direktverfahren ist bisher bei aus PVC bestehenden Druckträgerschichten angewandt worden, wobei auf die PVC-Druckträgerschicht der Haftklebstoff aufgebracht wird. Nach dem Aufbringen des Haftklebstoffes wird das Schichtmaterial einer Trocknungsstation zugeführt. Beim Trocknen des Haftklebstoffes auf der PVC-Druckträgerschicht wird die Temperatur der Druckträgerschicht nur gesteuert, und zwar mittels der Lufttemperatur. Problematisch ist, daß es bei dem Direktverfahren zu plastischen Verformungen und Schädigungen der Druckträgerschicht kommen kann, wenn die zulässigen Temperaturen der Druckträgerschicht nicht eingehalten werden.

Der Unterschied zwischen dem Transfer- und Direktverfahren besteht also darin, daß der Haftklebstoff beim Transferverfahren auf die Abdeckschicht aufgebracht wird, während es beim Direktverfahren so ist, daß die Haftklebstoffschicht auf die Druckträgerschicht aufgebracht wird. Ein Vorteil des Direktverfahrens besteht darin, daß die Abdeckschicht und damit die in der Regel darauf vorgesehene Silikonschicht nicht unnötigerweise beansprucht werden, wie dies beim Transferverfahren der Fall ist. Etwaige Beschädigungen der Silikonschicht können also nicht auftreten. Ein weiterer Vorteil des Direktverfahrens ergibt sich dadurch, daß der Haftklebstoff nicht mehr auf eine klebstoffabweisende Schicht, sondern auf die Druckträgerschicht aufgebracht wird und folglich grundsätzlich keine Zusatzstoffe dem Haftklebstoff mehr beigegeben werden müssen, um Benetzungsfehler auszuschließen. Allerdings besteht beim Direktverfahren die Gefahr der Schädigung der Druckträgerschicht während der Wärmebehandlung beim Trocknen.

Aufgabe der vorliegenden Erfindung ist es, ein Verfahren zur Herstellung einer Folienbahn zur Verfügung zu stellen, das einfach und kostengünstig durchgeführt werden kann, wobei Schädigungen der Druckträgerschicht bei der Trocknung vermieden werden sollen. Aufgabe der Erfindung ist aber auch die zur Verfügungsstellung einer Vorrichtung zur Durchführung des vorgenannten Verfahrens.

Das erfindungsgemäße Verfahren, bei dem die zuvor hergeleitete und aufgezeigte Aufgabe gelöst ist, ist nun zunächst und im wesentlichen dadurch gekennzeichnet, daß die Temperatur der mit der Haftklebstoffschicht versehenen Druckträgerschicht geregelt wird. Bei der Erfindung ist es also so, daß die Haftklebstoffschicht auf die Druckträgerschicht aufgebracht wird und die mit der Haftklebstoffschicht versehene Druckträgerschicht der Trocknung zugeführt wird. Dabei wird die Ist-Temperatur der mit der Haftklebstoffschicht versehenen Druckträgerschicht während der Trocknung gemessen. In Abhängigkeit der gemessenen Ist-Temperatur der mit der Haftklebstoffschicht versehenen Druckträgerschicht wird die Trocknungstemperatur zur Erzielung einer vorgegebenen Soll-Temperatur der Druckträgerschicht eingestellt. Es ist in diesem Zusammenhang darauf hinzuweisen, daß die Haftklebstoffschicht nicht unmittelbar auf die Druckträgerschicht aufgebracht werden muß. Die Zwischenanordnung wenigstens einer weiteren Schicht ist ohne weiteres möglich, worauf auch nachfolgend noch näher eingegangen wird.

Beim Zustandekommen der Erfindung ist erkannt worden, daß es zu einer Schädigung der mit der Haftklebstoffschicht versehenen Druckträgerschicht kommen kann, wenn das Schichtmaterial während des Trocknungsvorganges eine zu hohe Temperatur annimmt. Für eine einwandfreie Druckträgerschicht ist eine Trocknung in einem genau definierten Temperaturbereich bzw. bei einer genau vorgegebenen Temperatur erforderlich. Eine derartige Trocknung, die weder zu einer plastischen Verformung noch zu einer sonstigen Schädigung der mit der Haftklebstoffschicht versehenen Druckträgerschicht führt, wird bei der Erfindung dadurch realisiert, daß im Gegensatz zum bekannten Direktverfahren die Temperatur des aus dem Haftklebstoff und der Druckträgerschicht bestehenden Schichtmaterials nicht mehr gesteuert, sondern geregelt wird. Es wird also eine Messung der Ist-Temperatur der mit der Haftklebstoffschicht versehenen Druckträgerschicht und eine anschließende Regelung durchgeführt, um eine bestimmte Soll-Temperatur dieses Schichtmaterials zu erreichen. Bei der Erfindung ist es also so, daß die Temperatur der mit der Haftklebstoffschicht versehenen Druckträgerschicht die Regelgröße dargestellt.

Besonders eignet sich das erfindungsgemäße Verfahren in Verbindung mit einem Material der Druckträgerschicht, das besonders temperaturempfindlich ist. In diesem Zusammenhang sind insbesondere Polyolefine, wie Polypropylen, Polybuten oder Polyethylen zu nennen. Diese Kunststoffe sind ausgesprochen temperaturempfindlich und haben ein nicht-lineares Temperaturverhalten. Sobald eine bestimmte kritische Temperatur erreicht ist bzw. überschritten wird, kommt es zu einer Schädigung einer aus einem solchen Material bestehenden Druckträgerschicht. Allerdings zeichnet sich eine Druckträgerschicht aus einem derartigen Kunststoff durch eine gute Bedruckbarkeit und Haltbarkeit aus. Mit dem erfindungsgemäßen Verfahren wird es nun also erstmals möglich, Druckträgerschichten aus Polyolefinen im Rahmen des Direktverfahrens verwenden zu können, ohne daß die Gefahr einer Schädigung dieses Materials bei der Trocknung besteht. Insbesondere wenn als Material der Druckträgerschicht ein Kunststoff der vorgenannten Art verwendet wird, liegt die Soll-Temperatur zwischen 50 °C und 70 °C und insbesondere bei etwa 60 °C. Bei der vorgenannten Temperatur ist sichergestellt, daß einerseits eine schnelle und gute Trocknung des Haftklebstoffs eintritt und andererseits eine Schädigung durch eine plastische Verformung der Druckträgerschicht sicher vermieden wird.

Obwohl es grundsätzlich möglich wäre, die Ist-Temperatur der mit Haftklebstoff versehenen Druckträgerschicht auf der haftklebstofffreien Seite über einen Sensor zu messen, der Kontakt mit dieser Seite hat, empfiehlt sich die berührungslose Messung der Temperatur der mit Haftklebstoff versehenen Druckträgerschicht. Hierdurch werden etwaige Belastungen durch und auf die Temperatursensoren ausgeschlossen.

Im übrigen bietet es sich an, neben der Temperaturmessung der mit Haftklebstoff versehenen Druckträgerschicht ein weiteres "Regulativ" zur Erzielung einer einwandfreien Folienbahn vorzusehen. Hierzu ist vorgesehen, daß während der Trocknung die Zugspannung in Längsrichtung der mit Haftklebstoff versehenen Druckträgerschicht gemessen und auf einen vorgegebenen Wert geregelt wird. Diese Zugspannungsmessung kann grundsätzlich sogar unabhängig von der Bahntemperaturregelung, d. h. auch ohne die Bahntemperaturregelung durchgeführt werden. Die Zugspannung der mit Haftklebstoff versehenen Druckträgerschicht ist unter anderem von dem Material und der Dicke dieser Schicht abhängig. In der Regel wird die Zugspannung aber derart geregelt, daß sich eine Zugspannung in der Folienbahn zwischen 20 und 100 N/m ergibt. Insbesondere in Verbindung mit einer aus einem Polyolefin bestehenden Druckträgerschicht beträgt die Soll-Zugspannung etwa 40 N/m.

Um etwaige Benetzungsfehler beim Aufbringen des Haftklebstoffs auf die Druckträgerschicht in jedem Falle auszuschließen, ist bei einer bevorzugten Ausgestaltung der Erfindung vorgesehen, daß die Grenzflächenenergie der Druckträgerschicht vor dem Aufbringen der Haftklebstoffschicht in Abhängigkeit von der Oberflächenspannung des Haftklebstoffs derart verändert wird, daß sich eine im wesentlichen vollständige Benetzung der der Haftklebstoffschicht zugewandten Seite der Druckträgerschicht mit dem Haftklebstoff ergibt und/oder daß sich eine gute Verbindung dieser Seite mit dem Haftklebstoff ergibt. Bevorzugt wird zur Veränderung der Grenzflächenenergie in der zuvor genannten Art und Weise die der Haftklebstoffschicht zugewandten Seite der Druckträgerschicht einer Korona-Behandlung unterzogen. Die Korona-Behandlung bietet sich insbesondere dann an, wenn als Material der Haftklebstoffschicht ein solches verwendet wird, bei dem die Gefahr der Wanderung von Molekü-Jen des Haftklebstoffes in die Druckträgerschicht sehr gering ist, eine Schutz- bzw. Primerschicht also nicht erforderlich ist.

Um die Gefahr der Wanderung von Molekülen des Haftklebstoffs in das Material der Druckträgerschicht in jedem Falle auszuschließen, ist bei einer anderen erfindungsgemäßen Ausgestaltung vorgesehen, daß auf die der Haftklebstoffschicht zugewandten Seite der Druckträgerschicht vor dem Aufbringen der Haftklebstoffschicht eine an sich seit vielen Jahren bekannte Primerschicht aufgebracht wird.

Nach dem Aufbringen der Primerschicht auf die Druckträgerschicht ist ebenfalls die Durchführung einer Trocknungsstufe erforderlich. Um auch in diesem Zusammenhang eine plastische Verformung oder Schädigung der mit der Primerschicht versehenen Druckträgerschicht zu vermeiden, ist vorgesehen, daß die Temperatur der mit der Primerschicht versehenen Druckträgerschicht während der Trocknung geregelt wird. Auch in diesem Zusammenhang ist also vorgesehen, daß die Temperatur der mit der Primerschicht versehenen Druckträgerschicht während der Trocknung gemessen und in Abhängigkeit der gemessenen Temperatur der mit der Primerschicht versehenen Druckträgerschicht die Trocknungstemperatur bei der Trocknung zur Erzielung einer vorgegebenen Soll-Temperatur der mit der Primerschicht versehenen Druckträgerschicht beeinflußt wird. Im übrigen bietet es sich natürlich auch in diesem Zusammenhang an, daß während der Trocknung die Zugspannung der mit der Primerschicht versehenen Druckträgerschicht gemessen und auf eine vorgegebene Soll-Zugspannung geregelt wird. Dabei können sich die Temperatur einerseits und die Zugspannung andererseits in den zuvor genannten Grenzen halten. Im übrigen versteht es sich, daß vorzugsweise auch in diesem Fall die Temperatur der mit der Primerschicht versehenen Druckträgerschicht berührungslos gemessen wird.

Im Zusammenhang mit der erfindungsgemäßen Folienbahn kann als Abdeckschicht ohne weiteres in an sich bekannter Weise eine mit einer haftklebstoffabweisenden Schicht, insbesondere einer Silikonschicht, versehene Papierschicht oder aber eine Kunststoffschicht verwendet werden.

Im übrigen betrifft die Erfindung, wie eingangs erwähnt, auch eine Vorrichtung zur Durchführung des vorgenannten Verfahrens. Die erfindungsgemäße Vorrichtung ist dadurch gekennzeichnet, daß wenigstens eine Trocknungsstation mit einer Wärmeerzeugungseinrichtung vorgesehen ist, daß im Bereich der Trocknungsstation eine Meßeinrichtung zur insbesondere berührungslosen Messung der Temperatur der mit der Haftklebstoffschicht versehenen Druckträgerschicht und/oder der mit der Primerschicht versehenen Druckträgerschicht vorgesehen ist und daß eine Regeleinrichtung in der Trocknungsstation vorgesehen ist, die mit der Wärmeerzeugungseinrichtung gekoppelt ist. Die mit Regeleinrichtung gekoppelte Wärmeerzeugungseinrichtung verändert also in Abhängigkeit der Ist-Temperatur des Schichtmaterials die Trocknungstemperatur in der Trocknungsstation.

Im übrigen ist bei einer bevorzugten Ausgestaltung der erfindungsgemäßen Vorrichtung eine Meßeinrichtung zur Messung der Zugspannung in Längsrichtung der mit der Haftklebstoffschicht versehenen Druckträgerschicht und/oder der mit der Primerschicht versehenen Druckträgerschicht vorgesehen. Weiterhin ist eine Regeleinrichtung für die Zugspannung vorgesehen, die mit einer Zugspannungsstelleinrichtung gekoppelt ist. In Abhängigkeit der ermittelten Zugspannung wird also von der mit der Regeleinrichtung gekoppelten Zugspannungsstelleinrichtung die Zugspannung auf die gewünschte Soll-Zugspannung geregelt.

Nachfolgend wird ein Ausführungsbeispiel einer nach dem erfindungsgemäßen Verfahren hergestellten Folienbahn beschrieben. Dabei zeigt
- Fig. 1: eine Querschnittansicht von Schichtmaterialien einer erfindungsgemäßen Folienbahn zu Beginn der Herstellung,
- Fig. 2: eine Querschnittansicht von Schichtmaterialien der erfindungsgemäßen Folienbahn nach einem ersten Verfahrensschritt,
- Fig. 3: eine Querschnittansicht von Schichtmaterialien der erfindungsgemäßen Folienbahn nach einem weiteren Verfahrensschritt,
- Fig. 4: eine Querschnittansicht der erfindungsgemäßen Folienbahn nach dem letzten Verfahrensschritt der Herstellung und
- Fig. 5: eine schematische Darstellung einer erfindungsgemäßen Vorrichtung.

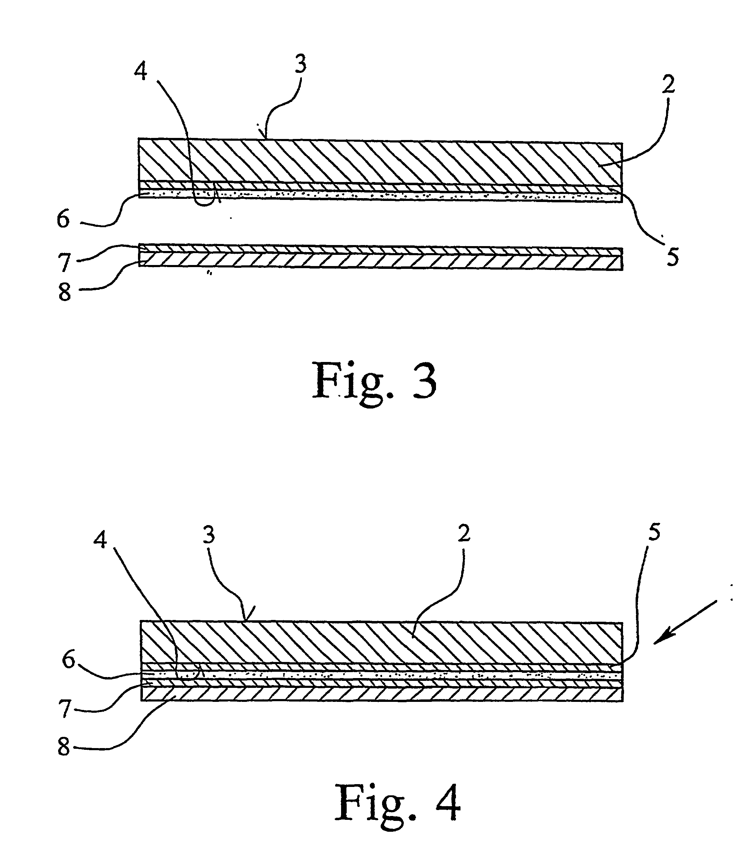

In Fig. 4 ist eine nach dem erfindungsgemäßen Verfahren hergestellte Folienbahn 1 im Querschnitt gezeigt. Die Folienbahn 1 weist eine Druckträgerschicht 2 auf, deren Oberseite 3 zum späteren Bedrucken vorgesehen ist. Die Druckträgerschicht 2 besteht vorliegend aus einem Polyolefin. Auf die Unterseite 4 der Druckträgerschicht 2 ist im dargestellten Ausführungsbeispiel eine Primerschicht 5 aufgebracht. Vorliegend handelt es sich um einen lösungsmittelfreien Primer. Auf die Primerschicht 5 wiederum ist eine Haftklebstoffschicht 6 mit einem wiederablösbaren Haftklebstoff aufgebracht. Bei dem Haftklebstoff kann es sich um jeglichen aus der Praxis bekannten Haftklebstoff handeln. Auch als Primer können alle handelsüblichen Primer verwendet werden, die sich im Zusammenhang mit aus Kunststoff bestehenden Druckträgerschichten einsetzen lassen. Die Haftklebstoffschicht 6 wiederum liegt auf einer Silikonschicht 7 einer Abdeckschicht 8 auf. Bei der Abdeckschicht 8 handelt es sich vorliegend um eine Papierschicht.

Nachfolgend wird nun anhand der einzelnen Figuren auf die erfindungsgemäßen Verfahrensschritte kurz eingegangen.

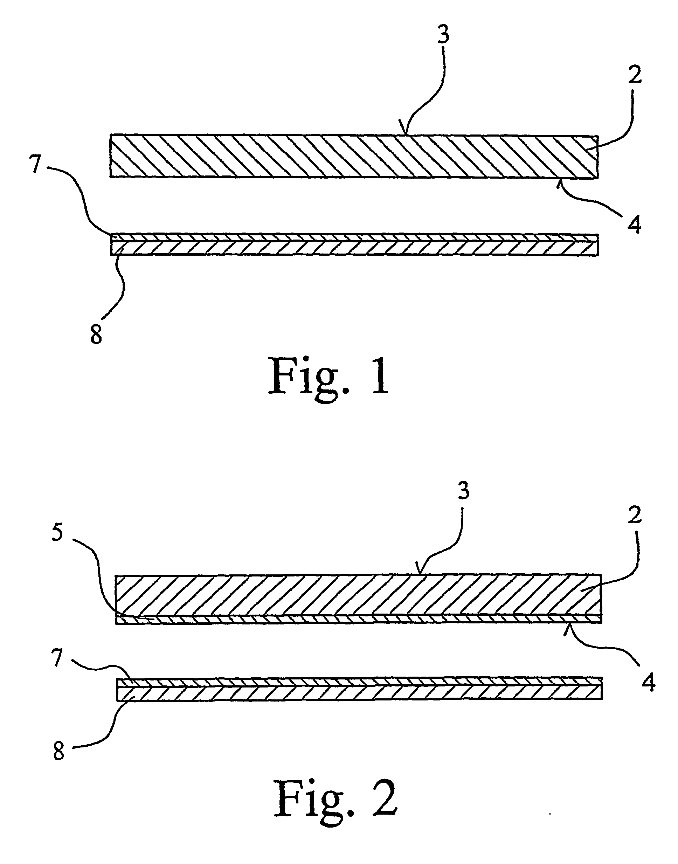

Zunächst sind, wie in Fig. 1 dargestellt, als AusgangsAusgangs-Schichtmaterialien die Druckträgerschicht 2 einerseits und die mit der Silikonschicht 7 versehene Abdeckschicht 8 vorgesehen.

Nach der Darstellung in Fig. 2 ist auf die Unterseite 4 der Druckträgerschicht 2 bereits die Primerschicht 5 aufgebracht worden. Nach dem Aufbringen der Primerschicht 5 wird diese auf der Druckträgerschicht 2 bei einer vorgegebenen Temperatur getrocknet, wobei die Temperatur der mit der Primerschicht 5 versehenen Druckträgerschicht 2 während der Trocknung gemessen und geregelt wird. Außerdem wird bei der Trocknung die Zugspannung in Längsrichtung der mit der Primerschicht 5 versehenen Druckträgerschicht 2 gemessen und auf eine vorgegebene Soll-Zugspannung geregelt.

Nicht dargestellt ist, daß die Primerschicht 5 auch weggelassen werden kann. In diesem Falle kann die Unterseite 4 der Druckträgerschicht 2 einer Korona-Behandlung unterzogen werden, um hierdurch die Oberflächenenergie der Unterseite 4 zu verändern, um so die Unterseite 4 an die Oberflächenspannung des Haftklebstoffs der anschließend aufzubringenden Haftklebstoffschicht 6 anzupassen, so daß sich keine Benetzungsprobleme ergeben.

Nach dem Aufbringen der Primerschicht 5 wird auf diese die Haftklebstoffschicht 6 aufgebracht, wie dies in Fig. 3 dargestellt ist, und anschließend wird dieses Schichtmaterial einer Trocknungsstation zugeführt. Dabei wird die Temperatur des aus der Druckträgerschicht 2, der Primerschicht 5 und der Haftklebstoffschicht 6 bestehenden Schichtmaterials gemessen und auf eine Soll-Temperatur von etwa 60 °C geregelt, wobei die Temperaturmessung des Schichtmaterials berührungslos erfolgt. Im übrigen wird während der Trocknung des Schichtmaterials die Zugspannung gemessen und auf eine Soll-Zugspannung von etwa 40 N/m geregelt.

In Fig. 4 ist schließlich die Folienbahn 1 dargestellt, nachdem das Schichtmaterial nach der Trocknung mit der die Silikonschicht 7 aufweisenden Abdeckschicht 8 zusammengeführt bzw. kaschiert worden ist.

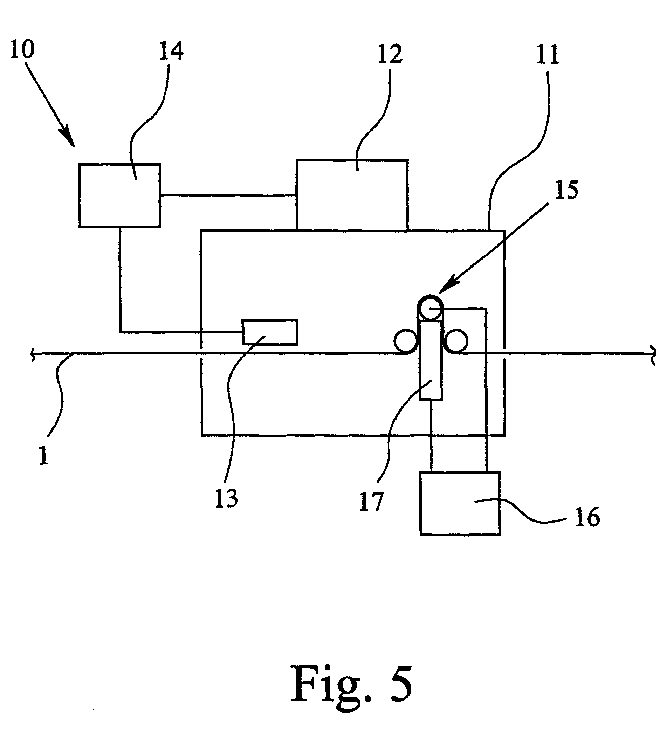

Die Fig. 5 zeigt eine sehr schematische Darstellung einer erfindungsgemäßen Vorrichtung 10. Die Vorrichtung 10 weist wenigstens eine Trocknungsstation 11 auf, der wiederum eine Wärmeerzeugungseinrichtung 12 zugeordnet ist. Innerhalb der Trocknungsstation 11 befindet sich eine Meßeinrichtung 13 zur Messung der Temperatur der mit der Haftklebstoffschicht versehenen Druckträgerschicht. Über die Meßeinrichtung 13 erfolgt eine berührungslose Messung der Temperatur. Weiterhin ist eine Regeleinrichtung 14 vorgesehen, die mit der Wärmeerzeugungseinrichtung 12 und der Meßeinrichtung 13 gekoppelt ist, so daß die Ist-Temperatur der mit der Haftklebstoffschicht versehenen Druckträgerschicht während der Trocknung in der Trocknungsstation 11 gemessen und in Abhängigkeit der gemessenen Ist-Temperatur der mit der Haftklebstoffschicht versehenen Druckträgerschicht die Trocknungstemperatur bei der Trocknung zur Erzielung einer vorgegebenen Soll-Temperatur der Druckträgerschicht beeinflußt wird.

Des weiteren befindet sich innerhalb der Trocknungsstation 11 eine Meßeinrichtung 15 zur Messung der Zugspannung in der mit der Haftklebstoffschicht versehenen Druckträgerschicht. Außerdem ist eine Regeleinrichtung 16 vorgesehen, die mit einer Zugspannungsstelleinrichtung 17 gekoppelt ist. Über die Meßeinrichtung 15, die Regeleinrichtung 16 und die Zugspannungsstelleinrichtung 17 läßt sich die optimale Zugspannung der mit der Haftklebstoffschicht versehenen Druckträgerschicht ohne weiteres einstellen.

## Patentansprüche

1. Verfahren zur Herstellung einer Folienbahn (1), wobei die Folienbahn (1) wenigstens eine Druckträgerschicht (2) aus Kunststoff, eine Haftklebstoffschicht (6) und eine Abdeckschicht (8) aufweist, wobei die Haftklebstoffschicht (6) auf die Druckträgerschicht (2) aufgebracht wird, wobei die mit der Haftklebstoffschicht (6) versehene Druckträgerschicht (2) einer Trocknung zugeführt wird und wobei die mit der Haftklebstoffschicht (6) versehene Druckträgerschicht (2) nach der Trocknung mit der Abdeckschicht (8) zur Herstellung der Folienbahn (1) zusammengeführt wird, **dadurch gekennzeichnet, daß** die Temperatur der mit der Haftklebstoffschicht (6) versehenen Druckträgerschicht (2) geregelt wird.

2. Verfahren nach Anspruch 1, **dadurch gekennzeichnet, daß** als Kunststoff der Druckträgerschicht (2) ein Polyolefin, insbesondere Polypropylen, Polybuten oder Polyethylen verwendet wird.

3. Verfahren nach Anspruch 1 oder 2, **dadurch gekennzeichnet, daß** die mit der Haftklebstoffschicht (6) versehene Druckträgerschicht (2) auf eine Temperatur zwischen 50 °C und 70 °C, insbesondere auf etwa 60 °C geregelt wird.

4. Verfahren nach einem der Ansprüche 1 bis 3, **dadurch gekennzeichnet, daß** die Temperatur der mit der Haftklebstoffschicht (6) versehenen Druckträgerschicht (2) berührungslos gemessen wird.

5. Verfahren nach einem der Ansprüche 1 bis 4, **dadurch gekennzeichnet, daß** während der Trocknung die Zugspannung der mit der Haftklebstoffschicht (6) versehenen Druckträgerschicht (2) geregelt wird.

6. Verfahren nach Anspruch 5, **dadurch gekennzeichnet, daß** die Zugspannung der mit der Haftklebstoffschicht (6) versehenen Druckträgerschicht (2) auf eine Zugspannung zwischen 20 und 100 N/m, vorzugsweise auf etwa 40 N/m, geregelt wird.

7. Verfahren nach einem der Ansprüche 1 bis 6, **dadurch gekennzeichnet, daß** die Grenzflächenenergie der mit der Haftklebstoffschicht (6) versehenen Druckträgerschicht (2) vor dem Aufbringen der Haftklebstoffschicht (6) in Abhängigkeit der Oberflächenspannung des Haftklebstoffes der Haftklebstoffschicht (6) derart verändert wird, daß sich eine im wesentlichen vollständige Benetzung der der Haftklebstoffschicht (6) zugewandten Seite der Druckträgerschicht (2) und/oder eine gute Verbindung der Haftklebstoffschicht (6) mit der Druckträgerschicht (2) ergibt.

8. Verfahren nach Anspruch 7, **dadurch gekennzeichnet, daß** die der Haftklebstoffschicht (6) zugewandte Seite der Druckträgerschicht (2) einer Korona-Behandlung unterzogen wird.

9. Verfahren nach einem der Ansprüche 1 bis 6, **dadurch gekennzeichnet, daß** auf die der Haftklebstoffschicht (6) zugewandten Seite der Druckträgerschicht (2) vor dem Aufbringen der Haftklebstoffschicht (6) eine Primerschicht (5) aufgebracht wird.

10. Verfahren nach einem der Ansprüche 1 bis 9, **dadurch gekennzeichnet, daß** als Abdeckschicht (8) eine mit einer haftklebstoffabweisenden Schicht, insbesondere einer Silikonschicht (7), versehene Papierschicht oder eine Kunststoffolie verwendet wird.

11. Vorrichtung zur Durchführung des Verfahrens nach einem der vorhergehenden Ansprüche, **dadurch gekennzeichnet, daß** wenigstens eine Trocknungsstation (11) mit einer Wärmeerzeugungseinrichtung (12) vorgesehen ist, daß im Bereich der Trocknungsstation (11) eine Meßeinrichtung (13) zur insbesondere berührungslosen Messung der Temperatur der mit der Haftklebstoffschicht (6) versehenen Druckträgerschicht (2) und/oder der mit der Primerschicht (5) versehenen Druckträgerschicht (2) vorgesehen ist und daß eine Regeleinrichtung (14) vorgesehen ist, die mit der Wärmeerzeugungseinrichtung (12) gekoppelt ist.

12. Vorrichtung nach Anspruch 11, **dadurch gekennzeichnet, daß** eine Meßeinrichtung (15) zur Messung der Zugspannung in der mit der Haftklebstoffschicht (6) versehenen Druckträgerschicht (2) und/oder der mit der Primerschicht (5) versehenen Druckträgerschicht (2) vorgesehen ist und daß eine Regeleinrichtung (16) für die Zugspannung vorgesehen ist, die mit einer Zugspannungsstelleinrichtung (17) gekoppelt ist.

## Claims

1. Method for producing a film sheet (1) wherein the film sheet has at least one print carrier layer (2) of plastic, an adhesive layer (6) and a cover layer (8), wherein the adhesive layer (6) is applied to the print carrier layer; wherein the print carrier layer (2) with the adhesive layer is dried thereon; and wherein after said drying, the print carrier layer (6), which has been provided with the adhesive layer (6) and the over layer are combined to produce the film sheet (1), **characterized in that** the temperature of the print carrier layer (2) provided with the adhesive layer (6) is automatically controlled.

2. Method according to claim 1, **characterized in that** a polyolefin, in particular polypropylene, polybutene or polyethylene, is used as the plastic of the print carrier layer (2).

3. Method according to claim 1 or 2, **characterized in that** the temperature to which the print carrier layer (2) provided with the adhesive layer (6) is controlled is a temperature between 50° C and 70° C, in particular approximately 60° C.

4. Method according to any one of claims 1 to 3, **characterized in that** the temperature of the print carrier layer (2) provided with the adhesive layer (6) is measured without contact.

5. Method according to any one of claims 1 to 4, **characterized in that** the tensile stress of the print carrier layer (2) provided with an adhesive layer (6) is automatically controlled during drying.

6. Method according to claim 5, **characterized in that** the tensile stress of the print carrier layer (2) provided with the adhesive layer (6) is adjusted to a predetermined value between 20 and 100 N/m, preferably of approximately 40 N/m.

7. Method according to any one of claims 1 to 6, **characterized in that** the interfacial energy of the print carrier layer (2) is changed depending on the surface tension of the adhesive of the adhesive layer (6) before applying the adhesive layer (6) so that an essentially complete wetting to the side of the print carrier layer (2) facing the adhesive layer (6) is achieved and/or so that a good connection of the adhesive layer (6) with the carrier layer (2) results.

8. Method according to claim 7, **characterized in that** the side of the print carrier layer (2) facing the adhesive layer (6) is subjected to a corona treatment.

9. Method according to any one of claims 1 to 6, **characterized in that** a primer layer (5) is applied to a side of the print carrier layer (2) to which the adhesive layer (6) is to be applied before applying the adhesive layer (6).

10. Method according to any one of claims 1 to 9, **characterized in that** one of a paper layer and a plastic film, which is provided with an adhesive-repellant layer, in particular a silicone layer, is used as the cover layer (8).

11. Apparatus for carrying out the method according to the previous claims, **characterized in that** at least one drying station (11) with a heat generating means (12) is provided, that a measurement means (13) is provided in the area of the drying station (11) in particular for non-contact measurement of the temperature of the print carrier layer (2) provided with the adhesive layer (6) or the print carrier layer (2) provided with a primer layer (5), and that a control means (14) is provided, which is coupled to said measurement means (13).

12. Apparatus according to claim 11, **characterized in that** a measurement means (15) is provided for measuring tensile stress in the print carrier layer (2) provided with the adhesive layer (6) or the print carrier layer (2) provided with a primer layer (5); and that a control means (16) for the tensile stress is provided that is also coupled to a tensile stress adjustment means (17).

## Revendications

1. Procédé de fabrication d'une bande de film (1), la bande de film (1) présentant au moins une couche support d'impression (2) en matière plastique, une couche de colle de contact (6) et une couche de recouvrement (8), la couche de colle de contact (6) étant appliquée sur la couche support d'impression (2), la couche support d'impression (2) pourvue de la couche de colle de contact (6) étant acheminée vers un séchage et la couche support d'impression (2) pourvue de la couche de colle de contact (6) étant après séchage assemblée à la couche de recouvrement (8) pour fabriquer la bande de film (1),
**caractérisé en ce que**
la température de la couche support d'impression (2) pourvue de la couche de colle de contact (6) est réglée.

2. Procédé selon la revendication 1, **caractérisé en ce qu'**on utilise comme matière plastique de la couche support d'impression (2) une polyoléfine, notamment du polypropylène, du polybutène ou du polyéthylène.

3. Procédé selon la revendication 1 ou 2, **caractérisé en ce que** la couche support d'impression (2) pourvue de la couche de colle de contact (6) est réglée à une température allant de 50 °C à 70 °C, notamment à environ 60 °C.

4. Procédé selon l'une quelconque des revendications 1 à 3, **caractérisé en ce que** la couche support d'impression (2) pourvue de la couche de colle de contact (6) est mesurée sans contact.

5. Procédé selon l'une quelconque des revendications 1 à 4, **caractérisé en ce que**, pendant le séchage, la tension de traction de la couche support d'impression (2) pourvue de la couche de colle de contact (6) est réglée.

6. Procédé selon la revendication 5, **caractérisé en ce que** la tension de traction de la couche support d'impression (2) pourvue de la couche de colle de contact (6) est réglée à une tension de traction allant de 20 à 100 N/m, de préférence à environ 40 N/m.

7. Procédé selon l'une quelconque des revendications 1 à 6, **caractérisé en ce que** l'énergie de surface de contact de la couche support d'impression (2) pourvue de la couche de colle de contact (6) est modifiée avant l'application de la couche de colle de contact (6) en fonction de la tension de surface de la colle de contact de la couche de colle de contact (6) de manière à ce qu'on obtienne une réticulation sensiblement complète de la face tournée vers la couche de colle de contact (6) de la couche support d'impression (2) et/ou une bonne liaison de la couche de colle de contact (6) avec la couche support d'impression (2).

8. Procédé selon la revendication 7, **caractérisé en ce que** la face tournée vers la couche de colle de contact (6) de la couche support d'impression (2) est soumise à un traitement au corona.

9. Procédé selon l'une quelconque des revendications 1 à 6, **caractérisé en ce qu'**on applique sur la face tournée vers la couche de colle de contact (6) de la couche support d'impression (2) une couche de fond (5) avant l'application de la couche de colle de contact (6).

10. Procédé selon l'une quelconque des revendications 1 à 9, **caractérisé en ce qu'**on utilise comme couche de recouvrement (8) une couche imperméable à la colle de contact, notamment une couche en papier recouverte d'une couche de silicone (7) ou un film en matière plastique.

11. Dispositif de réalisation du procédé selon l'une quelconque des revendications précédentes,
**caractérisé en ce**
**qu'**il est prévu au moins une station de séchage (11) comportant un dispositif de génération de chaleur (12), qu'il est prévu au niveau de la station de séchage (11) un dispositif de mesure (13) notamment pour la mesure sans contact de la température de la couche support d'impression (2) pourvue de la couche de colle de contact (6) et/ou de la couche support d'impression (2) pourvue de la couche de fond (5) et qu'il est prévu un dispositif de réglage (14) qui est couplé avec le dispositif de génération de chaleur (12).

12. Dispositif selon la revendication 11, **caractérisé en ce qu'**il est prévu un dispositif de mesure (15) pour mesurer la tension de traction dans la couche support d'impression (2) pourvue de la couche de colle de contact (6) et/ou la couche support d'impression (2) pourvue de la couche de fond (5) et qu'il est prévu un dispositif de réglage (16) de la tension de traction qui est couplé avec un dispositif de fixation de la tension de traction (17).
